**Europäisches Patentamt**

**European Patent Office**

**Office européen des brevets**

(19)

(11) **EP 1 312 938 A2**

(12) **EUROPÄISCHE PATENTANMELDUNG**

(43) Veröffentlichungstag:
**21.05.2003 Patentblatt 2003/21**

(51) Int Cl.⁷: **G01T 1/02**

(21) Anmeldenummer: **02102592.9**

(22) Anmeldetag: **15.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **17.11.2001 DE 10156629**

(71) Anmelder:
• **Philips Intellectual Property & Standards GmbH**
 **20099 Hamburg (DE)**
• **Koninklijke Philips Electronics N.V.**
 **5621 BA Eindhoven (NL)**

(72) Erfinder:
• **Nascetti, Augusto, Dr.**
 **52088, Aachen (DE)**
• **Overdick, Michael, Dr.**
 **52088, Aachen (DE)**

(74) Vertreter: **Volmer, Georg, Dipl.-Ing. et al**
 **Philips Intellectual Property & Standards GmbH,**
 **Postfach 50 04 42**
 **52088 Aachen (DE)**

(54) **Anordnung von Strahlungs-Sensorelementen**

(57)    Die Erfindung betrifft eine Anordnung von Sensorelementen, wobei die Sensorelemente dazu vorgesehen sind, elektromagnetische Strahlung wie Röntgenstrahlung oder Licht zu detektieren und dabei ein der Strahlungsintensität entsprechendes Ladungssignal zu erzeugen. Weiterhin weist ein Sensorelement Mittel auf, die die Bestimmung der Dosis der auftreffenden Strahlung ermöglichen. In der Anordnung bilden die Sensorelemente Gruppen, sodass die Ausgänge aller Sensorelemente einer Gruppe gekoppelt sind und die Sensorelemente einer Gruppe vorzugsweise benachbart angeordnet sind. Dadurch ist einerseits eine Bestimmung der Dosis in diesen Bereichen möglich und andererseits können durch das Kombinieren von Ausgangssignalen mehrerer Sensorelemente Bilder mit einer niedrigeren Auflösung auf einfach Art und Weise gebildet werden. Eine solche Anordnung kann beispielsweise in einer Röntgendiagnoseeinrichtung oder in einem optischen bildaufnehmenden System eingesetzt werden.

FIG. 1

EP 1 312 938 A2

**Beschreibung**

Die Erfindung betrifft eine Anordnung von Sensordementen, die beispielsweise in Röntgendiagnosesystemen bei der Röntgenbildentstehung Anwendung findet. Die Sensorelemente sind so ausgestaltet, dass eine Messung der Dosis der einfallenden Strahlung möglich ist. Weiterhin bilden die Sensorelemente Gruppen, wodurch einerseits eine Dosismessung in größeren Bereichen durchgeführt werden kann und andererseits das Zusammenfassen der Ausgangssignale mehrerer benachbarter Sensorelemente möglich ist.

Eine Anordnung von Sensorelementen ist beispielsweise aus der Offenlegungsschrift EP1089555A1 bekannt. Die Sensorelemente sind in Spalten und Zeilen angeordnet und so in Regionen benachbarter Sensorelemente aufgeteilt, dass die Ausgänge aller Sensorelemente einer Region mit einer Datenleitung verknüpft sind Alle Regionen können parallel ausgelesen werden, wobei in jeder Region sequentiell jedes Sensorelement oder kleine Gruppen von Sensorelementen gleichzeitig angesteuert werden.

Aufgabe der vorliegenden Erfindung ist es, eine Anordnung von Sensorelementen zu entwerfen, die eine einfache Bestimmung der Strahlendosis ermöglicht.

Die Lösung der Aufgabe wird mit einer Anordnung von Sensorelementen gemäß Anspruch 1 erreicht, wobei wenigstens ein Sensorelement mindestens einen Sensor, mindestens einen Ausgang, mindestens einen Steuereingang und mindestens eine Schalteinheit aufweist, wobei das Sensorelement aktivierbar ist, so dass im aktivierten Zustand ein vom Sensor erzeugtes Signal am Ausgang anliegt, wobei die Schalteinheit mit dem Sensor, mit dem Ausgang und mit dem Steuereingang gekoppelt ist und dazu vorgesehen ist, ein an dem Steuereingang anliegendes Signalmuster mit mindestens einem Aktivierungsmuster zu vergleichen und bei Übereinstimmung des anliegenden Signalmusters mit dem Aktivierungsmuster das Sensorelement zu aktivieren, wobei das Sensorelement wenigstens ein Mittel aufweist, das dazu vorgesehen ist, im nicht-aktivierten Zustand des Sensorelements einen Ladungsfluss zwischen Sensor und Ausgang zu ermöglichen, wobei die Anordnung wenigstens eine Gruppe von Selsorelementen aufweist, die derart ausgestaltet ist, dass mindestens ein Ausgang von jedem dieser Sensorelemente an einen Gruppenausgang gekoppelt ist und wobei in wenigstens einer Gruppe drei Sensorelemente eine geometrische Ebene aufspannen.

Die erfindungsgemäße Anordnung ist durch Sensorelemente gekennzeichnet, die dazu vorgesehen sind, mit Hilfe eines Sensors beispielsweise elektromagnetische Strahlung wie Licht oder Röntgenstrahlung zu detektieren. Trifft solche Strahlung auf ein Sensorelement, so wird im Sensor dieses Sensorelementes ein der Strahlungsintensität entsprechendes Ladungssignal erzeugt, welches über mindestens einen Ausgang des Sensorelements abfließen kann. Ein Ausgang eines Sensorelements ist typischerweise mit einer hier nicht näher beschriebenen signalverarbeitenden Komponente gekoppelt, die das am Ausgang des Sensorelements anliegende Ladungssignal weiter verarbeitet. Vorteilhafterweise soll das im Sensor entstandene Ladungssignal nur zu ausgewählten Zeitpunkten am Ausgang anliegen. Dazu weist ein Sensorelement eine Schalteinheit auf, die an den Sensor, den Ausgang und an einen Steuereingang des Sensorelements gekoppelt ist. Die Schalteinheit hat die Aufgabe, das Sensorelement zu aktivieren, wenn an dem Steuerdngang bestimmte Steuersignale oder Steuersignalmuster anliegen.

Weiterhin weist das Sensorelement Mittel zur Ermöglichung eines Ladungsflusses zwischen Sensor und Ausgang, also zwischen den im aktivierten Zustand gekoppelten Komponenten, auf. Dieser Ladungsfluss soll dann möglich sein, wenn das Sensorelement nicht aktiviert ist, das heißt, wenn der Sensor nicht direkt mit dem Ausgang gekoppelt ist und das Ladungs-Signal nicht am Ausgang anliegt. Solch ein Ladungsfluss kann beispielsweise dann eintreten, wenn Strahlung auf den Sensor trifft und sich im Sensor das Ladungssignal aufbaut. Mit anderen Worten: Die Mittel sollen einen durch den Aufbau des Ladungssignals bedingten Ladungsfluss zwischen Sensor und Ausgang ermöglichen. Wird dieser Ladungsfluss von einer hier nicht näher beschriebenen Einheit über eine bestimmte Zeit gemessen und daraus die geflossene Ladung bestimmt, so ist auf äußerst einfache und effiziente Art und Weise die Ermittlung der Dosis der Strahlung, die auf den Sensor des Sensorelements trifft, möglich, auch während die Bestrahlung stattfindet.

Die erfindungsgemäße Anordnung weist weiterhin mindestens eine Gruppe von Sensorelementen auf. Ein erstes Merkmal einer solchen Gruppe ist, dass wenigstens drei Sensorelemente der Gruppe eine geometrische Ebene aufspannen. Dies bedeutet, dass die zu einer Gruppe gehörenden Sensorelemente in der Anordnung beliebig mehrdimensional lokalisiert sein können. Ein zweites Merkmal wenigstens einer Gruppe ist, dass mindestens ein Ausgang von jedem Sensorelement einer Gruppe an einen gemeinsamen Gruppenausgang gekoppelt ist, an dem in der Regel eine Einheit zur Weiterverarbeitung der Ladungssignale der einzelnen Sensorelemente angeschlossen ist. Während eines Auslesevorgangs der Anordnung werden die Sensorelemente einer Gruppe beispielsweise nacheinander aktiviert und somit die Ladungssignale der Sensorelemente einer Gruppe nacheinander an dem Gruppenausgang zur Weiterverarbeitung bereitgestellt. Dadurch entfällt die Notwendigkeit, jedes Sensorelement mit einer eigenen Einheit zur Signalweiterverarbeitung zu koppeln. Aus der Kombination der beiden oben genannten Merkmale einer Gruppe ergibt sich, dass die Dosis der auf die Sensoren aller Sensorelemente einer Gruppe auftreffenden Strahlung gleichzeitig gemessen werden kann. Dies ist von Vorteil, da es für die Genauigkeit der Bestimmung der Gesamtdosis, die auf die Anordnung trifft, ausreichend ist, die Anordnung in Bereiche aufzuteilen und die Dosis aus der Summe der Dosen der einzelnen Bereiche zu bestimmen, anstatt die Gesamtdosis anhand der Summe der Dosen, die auf jedes einzelne Sensorelement treffen, zu bestimmen.

Eine Weiterbildung der Erfindung ergibt sich aus Anspruch 2. Soll eine erfindungsgemäße Anordnung mit bekannten Technologien hergestellt werden, ist es besonders vorteilhaft, bei der Planung der Schalteinheit der Sensorelemente die vorhandenen parasitären Kapazitäten eines Halbleiterschalters, die normalerweise als äußerst störend angesehen werden, gezielt so zu dimensionieren, dass sie zu einem ausreichenden Ladungsfluss genutzt werden können. Baut sich bei Bestrahlung des Sensorelements ein Ladungssignal auf, so kann der dabei stattfindende Ladungsfluss als ein Verschiebungsstrom angesehen werden. Alternativ oder gleichzeitig können zusätzliche Kapazitäten, beispielsweise parallel zu einem Schalter, angeordnet werden. In den Ausführungsbeispielen ist der Einsatz solcher Kapazitäten genauer beschrieben.

Bei der erfindungsgemäßen Anordnung kann die Dosis der auf die Anordnung treffende Strahlung dadurch bestimmt werden, dass zunächst die jeweiligen Dosen der einzelnen Gruppen ermittelt werden und anschließend die Gesamtdosis anhand der Aufsummierung dieser Gruppendosen errechnet wird. Bilden die Sensorelemente einer jeden Gruppe gemäß Anspruch 3 durch Ihre direkte Nachbarschaft einen geometrisch zusammenhängenden Bereich, so wird die gesamte Anordnung in zusammenhängende statt fragmentierte Bereiche unterteilt. Dies ist besonders vorteilhaft, da bei einer Aufteilung in zusammenhängende Bereiche eine einfache Bestimmung der Ortsabhängigkeit der Dosis innerhalb der gesamten Anordnung möglich ist. Weisen alle Gruppen weiterhin die gleiche Anzahl von Sensorelementen auf, so wird die Anordnung dadurch in regelmäßige Bereiche aufgeteilt. Bei homogener Bestrahlung der Anordnung werden alle Bereiche jeweils mit der gleichen Dosis bestrahlt. Eine solche Aufteilung bildet die Grundlage einer einfachen, schnellen und genügend präzisen Dosisbestimmung der gesamten Anordnung

Weist die Anordnung mehrere Gruppen auf und ist der jeweilige Gruppenausgang an eine eigene signalweiterverarbeitende Einheit gekoppelt, so können Vorteilhafterweise alle Gruppen parallel ausgelesen werden, indem beispielsweise in allen Gruppen gleichzeitig ein Sensorelement aktiviert ist. Dies kann auf einfache Art und Weise dadurch erreicht werden, dass die Sensorelemente, die gleichzeitig aktivierbar sein sollen, ein gleiches Aktivierungsmuster aufweisen und wenigstens ein Steuereingang von jedem dieser Sensorelemente beispielsweise mit einer gemeinsamen Steuerleitung gemäß Anspruch 4 gekoppelt ist. Wird die Steuerleitung mit diesem Aktivierungsmuster beaufschlagt, so werden die angekoppelten Sensorelemente aktiviert.

Durch den Einsatz einer Steuereinheit nach Anspruch 5 ist es möglich, die Auslesevorgänge der erfindungsgemäßen Anordnung flexibel zu gestalten. Wird die Anordnung in einem bilderzeugenden System eingesetzt, so ist ein gebräuchlicher Auslesevorgang durch das sequentielle Aktivieren und Auslesen aller Sensorelemente einer Gruppe gekennzeichnet. Dabei entspricht jeder Bildpunkt dem ausgelesenen Signal einem Sensorelement. Soll das Ausgangsbild beispielsweise eine geringere Auflösung aufweisen, so können innerhalb einer Gruppe statt einem Sensorelement mehrere Sensorelemente gleichzeitig aktiviert werden, sodass am Gruppenausgang ein Kombinationssignal, welches aus den an den Ausgängen der jeweils aktivierten Sensorelemente anliegenden Signale gebildet wird, anliegt. Dieses Kombinationssignal kann dann unmittelbar einem Bildpunkt des Ausgangsbildes zugeordnet werden. Es ist nicht notwendig, jedes Sensorelement der Anordnung auszulesen und in einer nachgeschalteten Datenverarbeitungseinheit einen Bildpunkt aus den Einzelsignalen der jeweiligen Sensorelemente zu bestimmen. Da das Kombinationssignal durch eine direkte Mittelwertbildung der Einzelsignale gebildet wird, ergibt sich als ein weiterer Vorteil ein geringeres Rauschen. Weiterhin ist es möglich, während eines Auslesevorgangs aus einer Gruppe gar kein Sensorelement zu aktivieren, wenn beispielsweise zur Bildung des Ausgangsbildes das Signal dieses Sensorelements nicht benötigt wird

Gemäß Anspruch 6 ist an jeden Gruppenausgang ein Ausleseverstärker gekoppelt. Dadurch ist es möglich, während eines Auslesevorgangs der Anordnung die an den jeweiligen Gruppenausgängen anliegenden Signale gleichzeitig zu verstärken und für eine Weiterverarbeitung aufzubereiten. Wird der Ausleseverstärker in einer weiteren Funktion gemäß Anspruch 7 dazu genutzt, anhand des Ladungsflusses die Dosis der auf die jeweilige Gruppe treffende Strahlung zu bestimmen, so kann für jede Gruppen gleichzeitig und damit für die gesamte Anordnung die Dosis ermittelt werden. Diese Ermittlung der Dosis kann dabei während der Bestrahlung stattfinden.

Wird die Anordnung gemäß Anspruch 8 eingesetzt, so kann Vorteilnafteiweise das bereitgestellte Signal dazu genutzt werden, nach Erreichen einer maximalen Strahlendosis die Bestrahlung der Anordnung zu stoppen. Dies kann beispielsweise durch Beeinflussung der Strahlenquelle selbst oder durch Mittel geschehen, die in den Strahlengang eingebracht werden. In der Beschreibung der Ausführungsbeispiele wird darauf näher eingegangen

Die Ansprüche 10 und 11 beschreiben jeweils ein Röntgenuntersuchungssystem und ein optisches Bildaufnahmesystem, worin eine Anordnung gemäß Anspruch 1 enthalten ist.

Nachfolgend werden bevorzugte Ausführungsbeispiele der Erfindung zur Erläuterung aufgeführt, wobei folgende Zeichnungen zur Veranschaulichung dienen:

> Fig. 1 zeigt einen Ausschnitt eines Beispiels einer erfindungsgemäßen Anordnung.
> Fig 2 zeigt ein allgemeines Sensorelement.
> Fig 3 zeigt ein Sensorelement mit einer Photodiode als Sensor.
> Fig 4 zeigt ein direktkonvertierendes Sensorelement.
> Fig 5 zeigt ein Sensorelement mit zwei Steuereingängen.
> Fig 6 zeigt zwei Diagramme zum zeitlichen Verlauf des Ladungssignals und des Ladungsflusses.

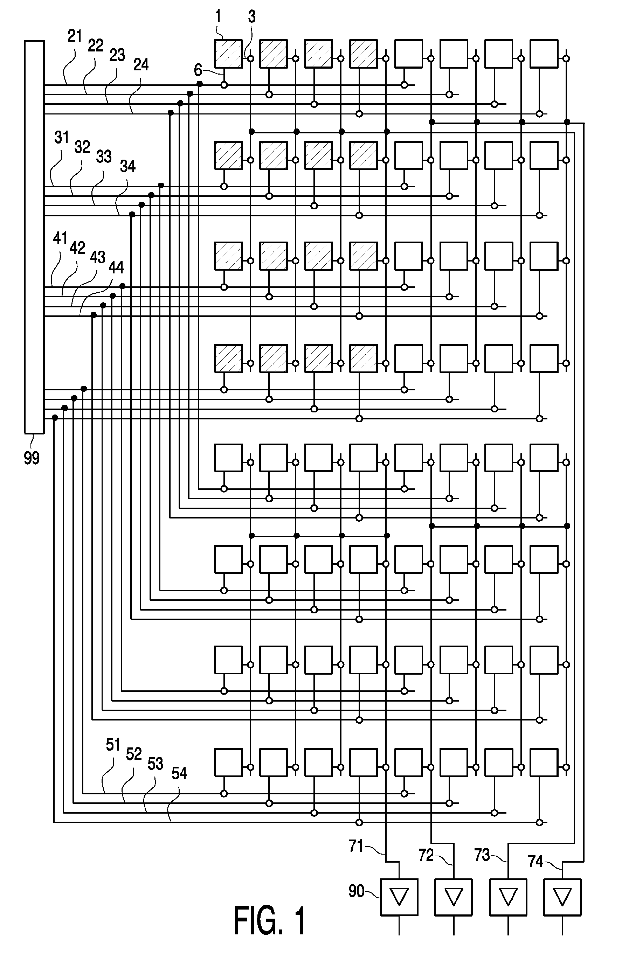

Fig 1 zeigt einen Ausschnitt einer erfindungsgemäßen Ausführung einer Anordnung von Sensorelementen. Die Sensorelemente 1 sind in einer Matrix aus Zeilen und Spalten angeordnet. Jedes Sensorelement 1 weist sowohl einen Steuereingang 6, über den das Sensorelement 1 aktiviert werden kann, als auch einen Ausgang 3 auf, über den im aktivierten Zustand das im Sensor des Sensorelements 1 entstandene Ladungssignal abfließen kann. Jeweils sechzehn Sensorelemente 1, die in einer Untermatrix aus jeweils vier Zeilen und vier Spalten angeordnet sind, bilden eine Gruppe, wovon in Fig 1 vier Stück dargestellt sind. Die Sensorelemente 1 von einer dieser vier Gruppen sind zur besseren Veranschaulichung schraffiert dargestellt. Die Ausgänge 3 der Sensorelemente 1 einer Gruppe sind jeweils an eine gemeinsame Gruppenausleseleitung 71, 72, 73 und 74 gekoppelt und jede Gruppenausleseleitung 71, 72, 73 und 74 ist mit einem Ausleseverstärker, beispielsweise 90, verknüpft. Der Steuereingang 6 eines Sensorelements 1 einer Gruppe ist mit dem Steuereingang 6 jeweils eines Sensorelements 1 einer anderen Gruppe über eine gemeinsame Steuerleitung 21, 22, 23, 24, 31, 32, ... , 53, 54 gekoppelt und jede gemeinsame Steuerleitung 21, 22, 23, 24, 31, 32, ... , 53, 54 ist mit einer Steuereinheit 99 verknüpft.

Werden die Steuerleitungen durch die Steuereinheit 99 einzeln sequentiell, beispielsweise in der Reihenfolge 21, 22, 23, 24, 31, 32 ... 53, 54, mit einem Aktivierungssignal beaufschlagt, so werden alle Sensorelemente 1 einer Gruppe nacheinander aktiviert und die Ladungssignale aller Sensorelemente 1 einer Gruppe gelangen nacheinander über die jeweilige Gruppenausleseleitung 71, 72, 73 und 74 zu dem jeweiligen Ausleseverstärker. Dies geschieht in allen Gruppen gleichzeitig, wodurch die Gruppen parallel ausgelesen werden. Ein daraus gebildetes Ausgangsbild kann die maximal mögliche Auflösung aufweisen.

Oftmals werden in einem bildgebenden System Bilder benötigt, die eine geringere Anzahl von Bildpunkten aufweisen, als maximal durch die Anordnung von Sensorelementen geliefert werden kann, d.h. deren Auflösung geringer ist als die maximal mögliche. Bei voller Auflösung entspricht jeder Bildpunkt dem Ladungssignal eines Sensorelements, bei einer reduzierten Auflösung ist die Anzahl der Bildpunkte kleiner als die Anzahl der Sensorelemente. Diese reduzierte Auflösung wird im allgemeinen dadurch erreicht, indem alle Sensorelemente der Anordnung ausgelesen werden und in einer hier nicht dargestellten Recheneinheit ein Bildpunkt aus der Kombination der einzelnen Ladungssignale mehrere Sensorelemente gebildet wird Dieses Verfahren nennt man Binning. Besteht die Anordnung beispielsweise aus 1000 Zeilen und 1000 Spalten und ein gebinntes Bild aus 500 Zeilen und 500 Spalten, so wird ein Bildpunkt beispielsweise aus den Ladungssignalen von vier benachbarten Sensorelementen, jeweils zwei in einer selben Zeile und zwei in einer selben Spalte, gebildet. Trotz der geringeren Bildauflösung bleibt die Datenmengs, die von der Anordnung zur Recheneinheit übertragen wird, die gleiche wie bei voller Auflösung des Bildes. Bei der erfindungsgemäßen Anordnung ist jedoch ein direktes Binning möglich, noch bevor die Signale zum Ausleseverstärker gelangen. Die dadurch reduzierte Datenmengs erlaubt bei gleichem Datenfluss eine höhere Bildsequenz bei aufeinanderfolgenden Bildern bei gleichzeitiger Verringerung des Rauschens im kombinierten Signal.

Das Ausgangsbild soll beispielsweise in den Zeilen und Spalten jeweils halb so viele Bildpunkte aufweisen, wie die Anordnung an Sensorelemente in Zeilen und Spalten enthält. Werden nun in Fig. 1 die gemeinsamen Steuerleitungen 21, 22, 31 und 32 durch die Steuereinheit 99 gleichzeitig mit einem Aktivierungssignal beaufschlagt, so sind in jeder Gruppe vier direkt mehrdimensional benachbarte Sensorelemente 1 gleichzeitig aktiviert, deren Ausgangssignale sich auf den jeweiligen Gruppenausleseleitungen 71, 72, 73 und 74 überlagern. Am jeweiligen Ausleseverstärker liegt somit ein aus vier Ausgangssignalen gebildetes Kombinationssignal an, welches ein gebinntes Ausgangssignal repräsentiert und direkt einem Bildpunkt im Ausgangsbild zugeordnet werden kann. Weitere Bildpunkte ergeben sich beispielsweise aus dem gebinnten Signal der Sensorelemente, die bei Beaufschlagung der Steuerleitungen

- 23, 24, 33, 34
- 41,42,51,52
- 43, 44, 53, 54

aktiviert werden. Soll die Auflösung des Bildes noch weiter reduziert werden, so können alle sechzehn Sensorelemente 1 einer Gruppe gleichzeitig aktiviert werden. Die Anordnung gemäß Fig 1 bietet demnach die Möglichkeit eines zweistufigen Binnings. Bilden bei einer größeren Anordnung mehr als sechzehn Sensorelemente eine Gruppe, beispielsweise 1024, jeweils 128 pro Zeile und Spalte, so ist ein mehrstufiges Binning beispielsweise derart möglich, dass in einer ersten Stufe jeweils vier Sensorelemente pro Gruppe gleichzeitig aktiviert werde, in einer zweiten Stufe 16 Sensorelemente pro Gruppe, in einer dritten Stufe 64, usw.

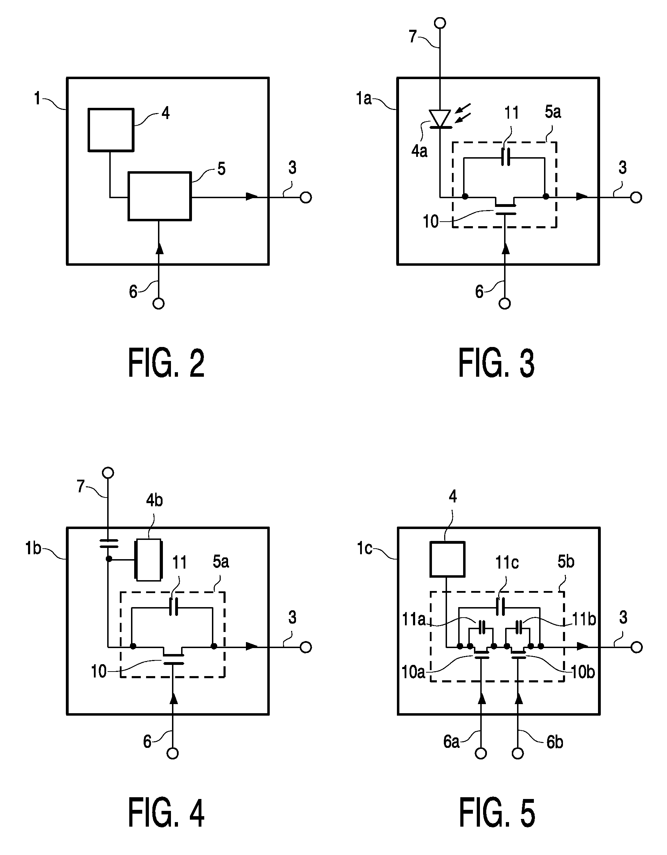

Bei großflächigen erfindungsgemäßen Anordnungen bilden in der Praxis weitaus mehr Sensorelemente eine Gruppe, als dies in Fig. 2 dargestellt ist.

Weiterhin erlaubt eine erfindungsgemäße Anordnung von Sensorelementen eine Dosismessung der eintreffenden Strahlung auf einem räumlich mehrdimensionalen Gebiet. Gemäß Fig 1 ist der durch die Sensorelemente 1 einer Gruppe gebildete Bereich zweidimensional und rechteckförmig, der Bereich bildet also eine Fläche. Über jedes Sensorelement 1 fließt während der Bestrahlung ein die Intensität der Strahlung charakterisierender Ladungsfluss, der von allen Sensorelementen 1 einer Gruppe addiert über die gemeinsame Gruppenausleseleitung 71, 72, 73 und 74 zum Ausleseverstärker gelangt. Der Ausleseverstärker ist neben dem eigentlichen Verstärken des Auslesesignals dazu vorgesehen, diesen Ladungsfluss zu messen. Anhand des aufintegrierten Ladungsflusses über einen bestimmten Zeitraum kann dann die auf die Fläche aller Sensorelemente einer Gruppe auftreffende Dosis der Strahlung hergeleitet werden.

Die erfindungsgsmäße Anordnung bietet die Möglichkeit, die Fläche, die durch die Sensorelemente einer Gruppe gebildet wird, hinsichtlich Größe und Form bezüglich einer Dosismessung zu optimieren. Es ist auch möglich, die Hächenform bei einigen oder jeder Gruppe unterschiedlich zu gestalten, um beispielsweise die Ränder einer erfindungsgemäßen Anordnung gegenüber dem mittleren Bereich gesondert zu behandeln. Auch ist denkbar, die Flächen der einzelnen Sensorelemente in Gruppen, die am Rand der Anordnung positioniert sind, größer auszugestalten als bei Sensorelementen einer Gruppe im mittleren Bereich der Anordnung, ähnlich wie den Lichtsensoren im menschlichen Augs gestaltet sind.

Die zur Bestimmung der Dosis notwendige Messung des Ladungsflusses kann durch bestimmte Merkmale der Schalteinheit eines jeden Sensorelements ermöglicht werden. Zunächst ist in Fig 2 eine allgemeine Ausführungsform eines Sensorelements 1 dargestellt. Das Sensorelement 1 enthält einen Sensor 4, der bei Auftreffen von elektromagnetischer Strahlung, beispielsweise Licht oder Röntgenstrahlung, ein Ladungssignal erzeugt. Weiterhin weist das Sensorelement 1 einen Ausgang 3 auf, über den das Ladungssignal zur Weiterverarbeitung abfließen kann. Damit das Abfließen des Ladungssignals kontrollierbar erfolgen kann, weist das Sensorelement 1 eine Schalteinheit 5 auf, die dazu vorgesehen ist, beim Anliegen eines Aktivierungssignals am Steuereingang 6 das Sensorelement 1 zu aktivieren. Ein aktiviertes Sensorelement 1 ist dadurch gekennzeichnet, dass der Sensor 4 mit dem Ausgang 3 gekoppelt ist.

Fig 3 stellt eine bevorzugte Ausführungsform eines Sensorelements 1a dar, welches zusätzlich zur Dosismessung eingesetzt werden kann. Der Sensor 4a besteht aus einer Photodiode 4a, die über einen Versorgungseingang 7 gespeist wird und beim Auftreffen von Licht ein Ladungssignal erzeugt, welches in den internen Kapazitäten der Photodiode 4a gespeichert wird. Die Schalteinheit 5a ist durch einen Halbleiterschalter 10 realisiert, der parallel zur Schaltstrecke eine Kapazität 11 aufweist. Der Versorgungseingang 7 und der Ausgang 3 sind über den hier nicht dargestellten, am Ausgang 3 angekoppelten Ausleseverstärker in einen Stromkreis eingebunden. Während das Sensorelement 1a nicht aktiviert ist, ist der Halbleiterschalter 10 geöffnet und die zu detektierende Strahlung, hier Licht, trifft auf die Photodiode 4a. Durch den Aufbau des Ladungssignals in den internen Kapazitäten der Photodiode 4a findet ein Ladungsfluss statt, der von der Photodiode 4a ausgehend über die Kapazitäten 11 zum Ausgang 3 und weiter zu dem hier nicht dargestellten Ausleseverstärker fließen kann. Aus der Menge der geflossenen Ladung lässt sich die auf die Photodiode 4a getroffene Dosis bestimmen, auch während eine Bestrahlung stattfindet. Zur Messung des eigentlichen Ladungssignals wird in einem nächsten Schritt das Sensorelement 1a durch Beaufschlagung des Steuereingangs 6 mit einem Aktivierungssignal aktiviert, wobei der Halbleiterschalter 10 geschlossen wind somit die Photodiode 4a mit dem Ausgang 3 gekoppelt ist. Dabei kann das an der Photodiode 4a anliegende Ladungssignal nahezu vollständig in den Ausleseverstärker abfließen. Durch anschließendes Öffnen des Halbleiterahalters 10 wird das Sensorelement 1a wieder deaktiviert und das Sensorelement 1a ist für eine weitere Messung bereit. Soll mit einem solchen Sensorelement 1a Röntgenstrahlung detektiert werden, so wird vor die Photodiode 4a ein sogenannter Szintillator angeordnet, der dazu vorgesehen ist, bei Auftreffen von Röntgenstrahlung Licht zu emittieren.

Fig 4 stellt eine andere bevorzugte Ausführungsform eines Sensorelementslb dar, welches in der erfindungsgemäßen Anordnung zum Einsatz kommen kann. Im Gegensatz zur gerade beschriebenen Ausführungsform ist der Sensor direktkonvertierend und wird durch eine Schicht 4b zwischen zwei Elektroden gebildet, wobei das Schichtmaterial dazu vorgesehen ist, beim Eintreffen von Röntgenstrahlung eine an den Elektroden anliegende Spannung zu ändern. Das Schichtmaterial kann beispielsweise aus amorphem Selen, Bleijodid, Bleioxid oder Quecksilberjodid bestehen. Die Spannungsänderung bewirkt einen Ladungsfluss über die Kapazität 11, die zum Halbleiterschalter 10 parallel geschaltet ist. Die Dosis der Strahlung und das Ladungssignal des Sensors 4b können anhand der oben zu Fig. 3 aufgeführten Verfahren und Mittelt bestimmt bzw. ausgelesen werden. Der Anschluss der zweiten Elektrode des Sensors 4b, die in der Regel als gemeinsame Elektrode aller Sensoren der Anordnung ausgeführt ist, ist hier nicht dargestellt.

Fig 5 stellt ein Ausführungsbeispiel eines Sensorelements dar, das mehr als einen Steuereingang aufweist. Die Schalteinheit 5b eines Sensorelements 1c weist zwei hintereinandergeschaltete Schalter 10a und 10b auf, wobei die Schalteingänge der Schalter 10a und 10b einen ersten Steuereingang 6a und einen zweiten Steuereingang 6b des Sensorelements 1c bilden. Zu jedem der Schalter 10a und 10b ist jeweils eine Kapazität 11a und 11b parallel geschaltet. Eine weitere optionale Kapazität 11c, die der gesamten Schaltstrecke der Schalteinheit 5b parallel geschaltet ist, zeigt beispielhaft die vielfältigen Gestaltungsmöglichkeiten für die optimale Anpassung an ein signalweiterverarbeitendes System. Mittels der Kapazitäten 11a, 11b und 11c ist die zuvor beschriebene Dosismessung in analoger Art und Weise möglich ist. Durch die Ausgestaltung von zwei Steuereingängen 6a und 6b je Sensorelement können die Aktivierungsmuster deutlich komplexer sein als bei Ausgestaltung der Sensorelemente mit nur einem Steuereingang. Der sich daraus ergebende Vorteil wird bei der Betrachtung der Anzahl von Steuerleitungen pro Gruppe deutlich. Dazu werden beispielhaft folgende Annahmen gemacht: Ein Steuereingang kann mit zwei unterschiedlichen Signalen '0' und '1' beaufschlagt werden. Weist ein Sensorelement *einen* Steuereingang auf, so sei es aktiviert, wenn an diesem Steuereingang das Signal '1' anliegt, weist ein Sensorelement *zwei* Steuereingänge auf, so sei aktiviert, wenn an beiden Steuereingängen gleichzeitig das Signal '1' anliegt. Unter diesen Vorraussetzungsn ist es, wie in Fig 1 verdeutlicht, notwendig, bei einer Anordnung mit jeweils einem Steuereingang je Sensorelement einer Gruppe für jedes dieser Sensorelemente jeweils eine Steuerleitung zuzuführen. Die Anzahl der Steuerleitungen, an die die Sensorelemente einer Gruppe gekoppelt sind, ist so groß wie die Anzahl ihrer Sensorelemente. Weisen die Sensorelemente dagegen jeweils zwei Steuereingänge auf, so ist es bei geschickter Kopplung der Steuereingänge an die Steuerleitungen möglich, die Gesamtzahl von Steuerleitungen, die einer Gruppe zugeführt werden müssen, deutlich zu reduzieren. Die Anzahl von Sensorelementen pro Gruppe sei $N$, die Anzahl von Steuerleitungen, die der Gruppe zugeführt werden, sei $L$. Bei einem Steuereingangje Sensorelement sind $L = N$ Steuerleitungen je Gruppe notwendig, bei zwei Steuereingängen pro Sensorelement sind je Gruppe mindestens $L = 2 \cdot \sqrt{N}$ Steuerleitungen notwendig, wobei $L$ auf eine nächsthöhere ganze Zahl aufzurunden ist. Je Größer die Anzahl von Sensorelementen je Gruppe ist, desto deutlicher wird dieser Effekt.

Die in Fig 2 bis 5 beispielhaft dargestellten Sensorelemente können mit bekannten Technologien hergestellt werden, beispielsweise in Dünnfilmelektronik mit Transistoren und gegebenenfalls Photodioden aus amorphem Silizium. Die gemäß der Erfindung zusätzlich benötigten Elemente zur Ermöglichung des Ladungsflusses können ebenfalls in der genannten Dünnfilmtechnik realisiert werden.

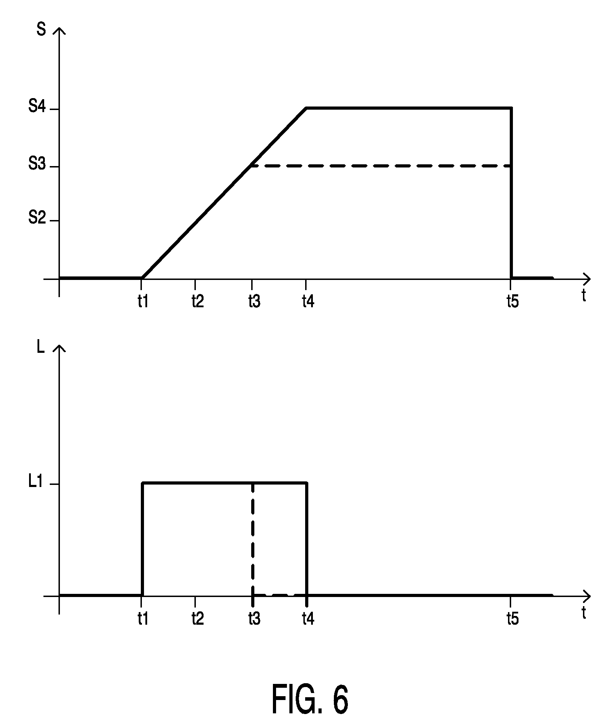

Fig 6 zeigt ein Diagramm, in dem beispielhaft der zeitliche Verlauf des Ladungssignals und des Ladungsflusses in einem Sensorelement dargestellt ist. Die senkrechte Achse im oberen Diagramm stellt die Höhe des Ladungssignals S, die senkrechte Achse im unteren Diagramm die Höhe des Ladungsflusses L und die waagerechte Achsen die Zeit t dar. Bis zu einem Zeitpunkt t1 liegt im Sensor kein Ladungssignal an und das Sensorelement wird nicht bestrahlt. Zunächst werden die durchgezogenen Kurvenverläufe betrachtet. Ab dem Zeitpunkt t1 wird das Sensorelement mit einer Strahlung, deren Intensität im weiteren Verlauf annähernd konstant ist, bestrahlt, wodurch das Ladungssignal annähernd linear ansteigt. Zu einem Zeitpunkt t4 hat das Ladungssignal den Wert S4 erreicht und die Bestrahlung wird beendet. Zu einem Zeitpunkt t5 wird das Sensorelement aktiviert und das Ladungssignal kann aus dem Sensorelement zur Weiterverarbeitung abließen. Während das Ladungssignal in dem Zeitraum zwischen t1 und t4 ansteigt, wird über die entsprechenden Mittel der Schalteinheit ein annähernd konstanter Ladungsfluss L1 ermöglicht, der im unteren Diagramm dargsstellt ist.

Aus der Menge der geflossenen Ladung kann die Dosis bestimmt werden. Wird während der Bestrahlung zu weiteren Zeitpunkten t2 und t3 die Menge der bereits geflossenen Ladung ermittelt, so kann schon während der Bestrahlung die bereits auf das Sensorelement getroffene Dosis bestimmt werden. Ist es erforderlich, dass eine bestimmte Dosis nicht überschritten wird, und wird diese maximale erlaubte Dosis zu einem Zeitpunkt t3 bereits erreicht, so kann diese Information dazu genutzt werden, mittels eines diese Überschreitung anzeigenden Warnsignals, das beispielsweise an eine Röntgenquelle geleitet wird, die weitere Bestrahlung zu stoppen. Es ergaben sich dann sowohl im oberen als auch im unteren Diagramm die gestrichelten Kurvenverläufe. Eine anders Verfahren zur Auswertung der Dosis während der Bestrahlung besteht darin, in regelmäßigen Zeitabständen den Ladungsfluss zu bestimmen und anhand geeigneter Algorithmen vorherzusagen, zu welchem Zeitpunkt die maximal erlaubte Dosis erreicht sein wird. Zu diesem Zeitpunkt wird dann die Bestrahlung gestoppt.

**Patentansprüche**

1. Anordnung mit Sensorelementen (1, 1a, 1b, 1c),

   - wobei wenigstens ein Sensorelement (1, 1a, 1b, 1c) mindestens einen Sensor (4, 4a, 4b), mindestens einen Ausgang (3), mindestens einen Steuereingang (6, 6a, 6b) und mindestens eine Schalteinheit (5, 5a, 5b) aufweist,
   - wobei das Sensorelement (1, 1a, 1b, 1c) aktivierbar ist, so dass im aktivierten Zustand ein vom Sensor (4, 4a, 4b) erzeugtes Signal am Ausgang (3) anliegt,
   - wobei die Schalteinheit (5, 5a, 5b) mit dem Sensor (4, 4a, 4b), mit dem Ausgang (3) und mit dem Steuereingang (6, 6a, 6b) gekoppelt ist und dazu vorgesehen ist, ein an dem Steuereingang (6, 6a, 6b) anliegendes Signalmuster mit mindestens einem Aktivierungsmuster zu vergleichen und bei Übereinstimmung des anliegenden Signalmusters mit dem Aktivierungsmuster das Sensorelement (1, 1a, 1b, 1c) zu aktivieren,

- wobei das Sensorelement (1, 1a, 1b, 1c) wenigstens ein Mittel (11, 11a, 11b) aufweist, das dazu vorgesehen ist, im nicht-aktivierten Zustand des Sensorelements (1, 1a, 1b, 1c) einen Ladungsfluss zwischen Sensor (4, 4a, 4b) und Ausgang (3) zu ermöglichen,

- wobei die Anordnung wenigstens eine Gruppe von Sensorelementen (1, 1a, 1b, 1c) aufweist, die derart ausgestaltet ist, dass mindestens ein Ausgang (3) von jedem dieser Sensorelemente (1, 1a, 1b, 1c) an einen Gruppenausgang gekoppelt ist und

- wobei in wenigstens einer Gruppe drei Sensorelemente (1, 1a, 1b, 1c) eine geometrische Ebene aufspannen.

2. Anordnung nach Anspruch 1,
   **dadurch gekennzeichnet,**
   **dass** ein Mittel des Sensorelements wenigstens eine Kapazität (11, 11a, 11b) und/oder parasitäre Kapazität eines oder mehrerer Halbleiterschalter (10, 10a, 10b) ist.

3. Anordnung nach Anspruch 1,
   **dadurch gekennzeichnet,**
   **dass** die Sensorelemente (1, 1a, 1b, 1c) einer Gruppe einen zusammenhängenden geometrischen Bereich bilden, der ausschließlich Sensorelemente (1, 1a, 1b, 1c) dieser Gruppe aufweist.

4. Anordnung nach Anspruch 1,
   **dadurch gekennzeichnet,**
   **dass** die Steuereingänge (6, 6a, 6b) einiger oder aller Sensorelemente (1, 1a, 1b, 1c) aus unterschiedlichen Gruppen gekoppelt sind

5. Anordnung nach Anspruch 1,
   **dadurch gekennzeichnet,**
   **dass** die Steuereingänge (6, 6a, 6b) einiger oder aller Sensorelemente (1, 1a, 1b, 1c) mit wenigstens einer Steuereinheit (99) gekoppelt sind, die dazu vorgssehen ist, die Sensorelemente (1, 1a, 1b, 1c) so zu aktivieren, dass Wahrend des Auslesevorgangs der Anordnung zu einem Zeitpunkt innerhalb einer Gruppe wahlweise keins, eins oder mehrere Sensorelemente (1, 1a, 1b, 1c) aktiviert sind.

6. Anordnung nach Anspruch 1,
   **dadurch gekennzeichnet,**
   **dass** der Gruppenausgang an wenigstens einen Ausleseverstärker (90) gekoppelt ist.

7. Anordnung nach Anspruch 6,
   **dadurch gekennzeichnet,**
   **dass** der Ausleseverstärker (90) zusätzlich dazu vorgesehen ist, den Ladungsfluss über eine bestimmte Zeit zu ermitteln.

8. Anordnung nach Anspruch 1,
   **dadurch gekennzeichnet,**
   **dass** die Anordnung eine Überwachungseinheit aufweist, die dazu vorgesehen ist, während einer Bestrahlung die auf die gesamte Anordnung oder Teile der Anordnung auftreffende Dosis zu bestimmen und bei Erreichen einer bestimmten Dosis ein Warnsignal bereitzustellen.

9. Röntgenuntersuchungssystem,
   **dadurch gekennzeichnet,**
   **dass** in dem Röntgenuntersuchungssystem mindestens eine Anordnung gemäß Anspruch 1 enthalten ist.

10. Optisches Bildaufnahmesystem,
    **dadurch gekennzeichnet,**
    **dass** in dem Bildaufnahmesystem mindestens eine Anordnung gemäß Anspruch 1 enthalten ist.

FIG. 1

FIG. 2

FIG. 3

FIG. 4

FIG. 5

FIG. 6